# FASCICULE DE BREVET EUROPEEN

(11) **EP 3 268 719 B1**
(45) Date de publication et mention de la délivrance du brevet: **26.12.2018**
(21) Numéro de dépôt: 16714485.6
(22) Date de dépôt: 09.03.2016
(51) Int. Cl.: G01N 11/08, G01N 13/00, G01N 1/20, G01N 11/00, E21B 21/06, E21B 43/20

(54) **DISPOSITIF DE CONTRÔLE EN LIGNE DE LA QUALITÉ D'UNE SOLUTION DE POLYMÈRE HYDROSOLUBLE FABRIQUÉE A PARTIR D'ÉMULSION INVERSE OU DE POUDRE DUDIT POLYMÈRE**
VORRICHTUNG ZUR INLINE-ÜBERWACHUNG DER QUALITÄT EINER WASSERLÖSLICHEN POLYMERLÖSUNG, DIE AUS EINER INVERTEMULSION ODER EINEM PULVER DIESES POLYMERS HERGESTELLT WIRD
DEVICE FOR IN-LINE MONITORING OF THE QUALITY OF A WATER-SOLUBLE POLYMER SOLUTION MANUFACTURED FROM INVERT EMULSION OR POWDER OF SAID POLYMER

(30) Priorité: 11.03.2015 FR 1552037
(43) Date de publication de la demande: 17.01.2018
(73) Titulaire: S.P.C.M. SA, 42160 Andrézieux Bouthéon (FR)
(72) Inventeur: FAVERO, Cédrick, 42610 Saint Romain Le Puy (FR); RIVAS, Christophe, 42610 Saint Romain Le Puy (FR)
(74) Mandataire: Cabinet Laurent & Charras
(86) Numéro de dépôt international: PCT/FR2016/050534
(87) Numéro de publication internationale: WO 2016/142623

(56) Documents cités:
- US-A- 4 821 564
- US-A- 4 845 981
- US-A1- 2009 090 504
- US-A1- 2014 053 637

## Description

Les émulsions inverses (eau dans huile) de polymère hydrosolubles sont largement utilisées pour leur propriétés épaississantes et floculantes dans de nombreux domaines. Cette forme particulière a pour avantage de pouvoir proposer sous forme liquide et concentrée des polymères de haut poids moléculaires. L'émulsion doit cependant idéalement être inversée sous forme plus ou moins concentrée avant l'utilisation du polymère, en mélangeant de l'eau à l'émulsion inverse de manière à obtenir une phase continue aqueuse dans laquelle se trouve le polymère.

Les émulsions inverses déshydratées ou non, de polymères hydrosolubles à base d'acrylamide sont utiles notamment dans la récupération assistée du pétrole (RAP ou EOR pour Enhanced Oil Recovery) et plus particulièrement dans les opérations off-shore. Une solution aqueuse polymérique est typiquement préparée sur la plateforme. Généralement, l'émulsion est inversée par ajout d'eau puis, mélangée dans un mélangeur, par exemple un mélangeur statique, pour donner une solution mère de concentration comprise entre 2.000 et 20.000 ppm. La solution mère elle-même est diluée en aval avec de l'eau ou une saumure pour donner la solution polymérique injectée dans la formation sous-terraine, dans laquelle la concentration en polymère est typiquement de l'ordre de 100 à 2.500 ppm.

Il est essentiel que l'émulsion soit bien inversée car bien inversée elle permettra de donner la viscosité et l'injectivité optimum à la solution polymérique, le polymère étant complètement disponible et réparti de manière homogène pour épaissir le milieu aqueux. Lorsque l'émulsion n'est pas bien inversée une partie du polymère ne joue pas son rôle épaississant et il en résulte une perte d'efficacité et d'injectivité de la solution préparée à partir de l'émulsion.

De la même manière les polymères hydrosolubles sous forme de poudre sont utiles notamment dans la récupération assistée du pétrole et plus particulièrement dans les opérations on-shore. Les poudres sont préparées sous forme de solution par dissolution de la poudre en solution plus ou moins concentrée. Généralement, la poudre est dissoute grâce à un appareil de dissolution, tel que le PSU (Polymère Slicing Unit) décrit dans le document WO2011/1076863 en une solution mère de concentration comprise entre 2.000 et 20.000 ppm, ladite solution mère étant disposée dans des cuves de maturation sous agitation, puis diluée en aval avec de l'eau pour donner la solution polymérique dite diluée, dans laquelle la concentration en polymère est typiquement de l'ordre de 100 à 2.500 ppm.
Il est également essentiel que la poudre soit bien dissoute et le polymère bien solubilisé dans l'eau ou une saumure.

Par la suite, par l'expression « mise en solution effective du polymère», on désigne sa mise en oeuvre dans des conditions permettant d'obtenir une viscosité optimale de la solution la viscosité optimale de la solution est la viscosité atteinte lorsque 100% du polymère hydrosoluble est dissous dans l'eau ou la saumure. Cette viscosité optimale est en pratique comprise entre 1 et 200 cps (mesure effectuée à 20°C avec un rhéomètre de type Brookfield avec un module UL).

Par « zone d'utilisation », on entend le lieu le plus en aval théoriquement accessible du procédé dans lequel est utilisée la solution aqueuse polymérique. Par exemple, dans le cas d'une opération EOR Off-shore, cet endroit est la tête d'injection dans la formation souterraine se trouvant au fond de la mer ou de l'océan.

Pour cela, il est connu de prélever ponctuellement un échantillon de la solution aqueuse polymérique afin de vérifier sa viscosité par rapport à la viscosité d'une même solution préparée dans des conditions optimales en laboratoire.

Cependant, il est parfois impossible de prélever un échantillon de solution dans les cas où la solution diluée n'est pas accessible ou difficilement accessible. C'est typiquement le cas en tête de puits lorsque celle-ci se trouve au fond de la mer ou de l'océan dans une opération off-shore où la difficulté est d'ordre technique. C'est également le cas lorsque la solution mère est par exemple préparée dans une station centralisée de dissolution puis transportée dans de longs pipelines vers des sous stations de dilution et enfin vers les puits injecteurs. La tête de puits peut alors se trouver dans une zone à risque (zone militaire) ou dans une zone protégée à accès limité dans une opération on-shore, alors que le lieu de préparation de la solution se trouve dans une zone accessible. Le problème peut se poser dans bien d'autres cas de figure. Le problème que se propose de résoudre l'invention est de proposer un appareil pour contrôler la mise en solution effective (inversion d'émulsion ou solubilisation de poudre) d'un polymère hydrosoluble au sein d'une solution diluée dans les cas où la solution diluée ne peut pas être prélevée, c'est à dire lorsqu'elle n'est pas accessible ou difficilement accessible.

Le demandeur a mis au point un appareil permettant d'atteindre ces objectifs.
Dans un premier aspect, l'invention concerne un appareil destiné à être connecté en dérivation entre 2 points d'une canalisation principale respectivement :
- un premier point au niveau duquel est formée une solution mère de polymère hydrosoluble obtenue par mélange d'eau ou de saumure avec une émulsion inverse dudit polymère, éventuellement déshydratée ou une poudre dudit polymère,
- et un second point à proximité duquel la solution mère est diluée.

L'appareil de l'invention permet de contrôler la mise en solution effective de la solution mère après dilution entre le point d'introduction de la solution mère dans la canalisation principale et sa zone d'utilisation, en particulier dans les cas où la solution diluée n'est pas accessible ou difficilement accessible.

Il comprend une canalisation sur laquelle sont insérés successivement :
- une pompe,
- un débitmètre,
- un moyen d'arrivée d'eau ou de saumure destiné à diluer la solution mère circulant dans la canalisation,
- un mélangeur apte à homogénéiser, en ligne, la solution mère diluée,
- un premier tube calibré pour simuler la distance et les conditions de déplacement de la solution diluée dans la canalisation principale entre le point au niveau duquel la solution mère est diluée et la zone d'utilisation,
- un moyen apte à réduire la pression de la solution diluée circulant dans la canalisation en amont du premier tube calibré de 0.1 à 100 bars,
- un second tube calibré pour créer une perte de charge,
- un dispositif de mesure de pression différentielle entre l'entrée et la sortie du second tube calibré.

Cet appareil permet de contrôler de manière fiable, grâce à la mesure de la viscosité de la solution, l'inversion satisfaisante ou non d'une émulsion inverse ou la solubilisation satisfaisante ou non d'une poudre de polymères hydrosolubles dans des installations dans lesquelles aucun prélèvement ne peut être effectué au motif que la zone d'application du polymère est non ou peu accessible.

Dans un second aspect, l'invention concerne une méthode pour contrôler la mise en solution effective d'un polymère hydrosoluble au niveau de sa zone d'utilisation, dans les cas où la solution n'est pas accessible ou difficilement accessible.

Les polymères hydrosolubles sont des polymères naturels, synthétiques ou semi-synthétiques. Les polymères synthétiques à base d'acrylamide sont préférés.

Les polymères en poudre sont obtenus par procédé gel. Les polymères en émulsion sont obtenus par polymérisation en émulsion dite inverse, suivie ou non d'une étape de déshydratation.

La pompe peut être de différents types, de préférence volumétrique. Elle peut aussi être centrifuge dans le cas des faibles pressions (inférieures à 100 bars). Son débit est typiquement compris entre 11/h et 100 1/h.

Le débitmètre peut être de tout type. Il s'agit préférentiellement d'un débitmètre de précision de type massique à effet de Coriolis, ou d'un débitmètre de type électromagnétique.

Le moyen d'arrivée d'eau ou de saumure pour diluer la solution se présente typiquement sous la forme d'un tuyau ou tube transportant l'eau ou la saumure, ledit tuyau étant connecté sur la canalisation de l'appareil. Comme déjà mentionné, une pompe et un débitmètre sont positionnés en amont de cette entrée de manière à pousser l'eau ou la saumure dans la dérivation à la pression et au débit nécessaire.

Le mélangeur permet l'homogénéisation de la solution mère avec l'eau ou la saumure ajoutée précédemment. Cela nécessite un mélangeur soigneusement étudié assurant le mélange de la solution et limitant la dégradation mécanique du polymère, qui est très sensible au cisaillement.

On peut par exemple utiliser un mélangeur dynamique constitué d'un rotor à faible cisaillement permettant d'incorporer la solution mère dans la saumure. Dans un mode de réalisation avantageux, le mélangeur est un mélangeur statique du type de ceux commercialisés par les sociétés Sulzer Chemtech 25 Ltd - Sulzer - Allee 48 - CH 8404 Winterthur - Suisse pour l'Europe et Kenics, Chemineer Inc, 125 Flagship Drive, North Andover, MA 01845 USA. Le mélangeur statique est avantageusement du type de ceux décrits précisément dans le document EP1437173, et commercialisés par SULZER sous les dénominations SMX et SMV.

De manière avantageuse, le mélangeur statique comprend au moins un élément de mélange unitaire présentant une structure en treillis. Chaque élément de mélange comprend un corps cylindrique externe renfermant les éléments de mélange proprement dits, lesquels se présentent sous la forme d'une structure en treillis spécifique. Le diamètre des éléments de mélange sont variables, et ajustables en fonction la perte de charge qu'ils engendrent. Le mélangeur statique engendre préférentiellement une perte de charge comprise entre 1 et 5 bars, de préférence entre 2 et 3 bars.

Le mélangeur statique comprend avantageusement de 10 à 50 éléments de mélange, plus avantageusement de 20 à 30 éléments de mélange.

Le premier tube calibré permet de simuler la distance et les conditions de déplacement (cisaillement, reynolds, temps de séjour, diamètre etc..) de la solution diluée dans la canalisation principale entre le point au niveau duquel la solution mère est diluée et la zone d'utilisation de la solution diluée. Son dimensionnement (longueur, diamètre interne) et sa nature sont déterminés en fonction du moyen qui permet d'acheminer la solution diluée de la zone de dilution à la zone d'utilisation. Préférentiellement ce tube se présente sous la forme d'un serpentin afin de réduire son encombrement.

Le moyen apte à réduire la pression de 0.1 à 100 bars est typiquement une vanne, appelé « choke » ou duse dans le domaine de la récupération assistée du pétrole. Il permet d'ajuster la pression à laquelle la solution diluée va être utilisée. Par exemple, dans un procédé EOR cela permet de contrôler la pression d'injection de la solution polymérique dans la formation sous-terraine.

Le deuxième tube calibré permet de créer une perte de charge dont on mesure l'amplitude grâce à un appareil de mesure de pression différentielle entre l'entrée et la sortie du second tube. Préférentiellement, ce tube se présente sous la forme d'un serpentin afin de réduire son encombrement.

Dans un mode de réalisation préféré, ce second tube calibré mesure entre 10 et 30 mètres de long, pour un diamètre interne de 5 à 20 mm, la paroi présentant une épaisseur de 2 à 5 mm. Ses dimensions pourront être modifiées par l'homme de l'art à la condition qu'elles permettent une perte de charge suffisante et mesurable par l'appareil de mesure de pression différentielle.

Le dispositif de mesure de la pression différentielle permet de mesurer la perte de charge dans le second tube calibré, ladite perte de charge étant inférieure à 2 bars. De manière générale, la perte de charge engendrée par le tube calibré est comprise entre 0.01 et 2 bars. Comme déjà indiqué, l'homme du métier saura adapter les dimensions du tube calibré en fonction de la perte de charge. Un dispositif du même type est par exemple décrit dans le document WO2012/140092.

L'appareil peut comprendre en outre :
- un troisième tube calibré pour simuler la distance et les conditions de déplacement de la solution mère dans la canalisation principale entre le point au niveau duquel elle est formée et le point au niveau duquel elle est diluée, le tube étant préférentiellement positionné entre le débitmètre et le moyen d'arrivée d'eau ou de saumure. En pratique, le tube se présente sous la forme d'un serpentin.
- un appareil de mesure de la concentration en polymère hydrosoluble en ligne. Il peut s'agir par exemple d'un appareil mesurant la conductivité de la solution polymérique permettant d'en déduire la concentration en polymère dans la solution, tel que décrit dans le document EP 2 734 475. Cet appareil est préférentiellement positionné entre le débitmètre et le moyen d'arrivée d'eau ou de saumure. Cet appareil est particulièrement dédié à la mesure d'une concentration en polymère d'une solution dite « mère » et comprenant entre 2.000 et 20.000 ppm de polymère dans une matrice eau salée.
- un filtre simple ou double avec une maille de 5 à 20 microns, permettant d'éliminer les matières en suspension pouvant bloquer la pompe ou le débitmètre. Ce filtre est avantageusement positionné avant la pompe.
- un absorbeur de pulsation, avantageusement positionné avant la pompe.

Dans l'appareil selon l'invention, la pompe, les tubes, le débitmètre sont aptes à résister à des pressions de 400 bars. Ils sont avantageusement fabriqués en un matériau choisi dans le groupe comprenant :
- les aciers austéno-ferritiques, avantageusement les aciers austéno-ferritiques contenant entre 24 et 26% de chrome et entre 6 et 8 % de nickel ;
- les superalliages contenant principalement du nickel, mais aussi plusieurs métaux comme le chrome, le magnésium, le fer et le titane (Hastelloy).

Ces matériaux permettent de faire face à toutes les compositions rencontrées pour la préparation des solutions polymériques, notamment les saumures dans les procédés EOR.

L'appareil selon l'invention est particulièrement destiné à être utilisé à des pressions allant de 50 à 400 bars.

Situé en amont du premier point de la canalisation principale se trouve typiquement un matériel permettant de combiner, soit l'émulsion inverse, soit la poudre de polymère hydrosoluble, avec de l'eau ou une saumure. Dans le cas d'une émulsion inverse, le matériel est typiquement un mélangeur, préférentiellement statique du même type que celui présent dans l'appareil selon l'invention. C'est le cas par exemple dans un procédé EOR en off-shore. Dans le cas d'une poudre, le matériel est typiquement un matériel de dissolution tel que le PSU (Polymère Slicing Unit) décrit dans le document WO20111076863. C'est le cas par exemple dans un procédé EOR en on-shore.

En aval du second point de la canalisation principale se trouve typiquement un moyen pour combiner la solution mère obtenue par inversion de l'émulsion inverse ou par dissolution de la poudre de polymère hydrosoluble avec de l'eau ou une saumure, par exemple un mélangeur statique, la solution diluée étant ensuite transportée vers la zone d'utilisation pouvant se trouver à plusieurs km du lieu de dilution.

Selon l'invention, la perte de charge mesurée en continue sous haute pression dans le second tube calibré permettant la perte de charge est extrapolable à la viscosité correspondante de la solution de polymère hydrosoluble, mesurée à pression atmosphérique dans un appareil de Brookfield dans les mêmes conditions de concentration, de température et de salinité mais ponctuellement. La viscosité de la solution est extrapolable en Viscosité Yield, c'est-à-dire à faible cisaillement.

Pour obtenir de bonnes corrélations, il est important que les taux de cisaillement dans le second tube calibré soient faibles et proches de ceux observés avec un viscosimètre Brookfield qui est un appareil largement utilisé dans l'industrie des polymères hydrosolubles, ainsi que dans l'application de la récupération assistée du pétrole.

Plus précisément, le taux de cisaillement dans le second tube calibré est préférentiellement compris entre 1 s⁻¹ et 500 s⁻¹, et très préférentiellement compris entre 5 s⁻¹ et 200 s⁻¹.

Les taux de cisaillement sont donc considérés comme faibles et cela est rendu possible grâce à une faible vitesse de circulation du fluide dans le second tube calibré, et ce sous haute pression.

Les viscosités déduites de la différence de pression vont de 0.5 à 1000 cps, préférentiellement de 1 à 100 cps.

L'inversion satisfaisante d'une émulsion inverse ou la solubilisation satisfaisante d'une poudre de polymères hydrosolubles est alors évaluée grâce à un ratio entre la valeur de viscosité de la solution diluée extrapolée à partir de la perte de charge et la viscosité d'une solution à partir de la même émulsion ou de la même poudre, dont on a préparé une solution à la même concentration dans des conditions optimales en laboratoire. Plus ce ratio est proche de 1, meilleure est la qualité de l'inversion ou la solubilisation de la poudre.

Lorsque ce ratio est inférieur à 0.9 ou à 0.8, voire 0.7, cela permet de conclure que la solution polymérique n'est pas optimale, ou telle que prévue dans la zone d'utilisation. Il convient alors de contrôler les différents paramètres de préparation, de transport afin d'identifier les causes de cette perte d'efficacité. Une fois les problèmes résolus, le ratio remonte théoriquement à une valeur proche de 1.

L'appareil est particulièrement avantageux dans un procédé de récupération assistée du pétrole et/ou du gaz off-shore. Dans ce cas, une émulsion inverse de polymère hydrosoluble est généralement utilisée. L'appareil convient également parfaitement dans un procédé de récupération assistée du pétrole et/ou du gaz on-shore. Dans ce cas, une poudre de polymère hydrosoluble est généralement utilisée.

L'invention concerne également une méthode pour contrôler la mise en solution effective d'un polymère hydrosoluble au niveau de sa zone d'utilisation dans le cas où celle-ci est inaccessible ou difficilement accessible, selon laquelle dans une canalisation :
- on forme une solution mère obtenue par mélange d'eau ou de saumure avec une émulsion inverse dudit polymère, ou une poudre dudit polymère,
- on dilue la solution mère,
- on transporte la solution diluée jusqu'à sa zone d'utilisation,
- entre la formation de la solution mère et sa dilution, on dérive une partie du flux circulant dans la canalisation pour la faire circuler dans l'appareil précédemment décrit,
- on calcule la viscosité de la solution diluée par extrapolation de la différence de pression mesurée par le dispositif de mesure de pression différentielle de l'appareil,
- on mesure la viscosité d'une solution du polymère préparée à la même concentration que celle de la solution diluée, et dans des conditions optimales en laboratoire.
- on calcule le ratio entre la valeur de viscosité obtenue par extrapolation et la viscosité de la solution réalisée en laboratoire,
- on en déduit la mise en solution satisfaisante ou non du polymère.

En pratique, la solution mère de polymère hydrosoluble a une concentration en polymère comprise entre 2.000 et 20.000 ppm et la solution diluée a une concentration en polymère comprise entre 100 et 2.500 ppm.

L'invention et les avantages qui en découlent ressortiront mieux de la figure et des exemples suivants, donnés afin d'illustrer l'invention et de manière non limitative.

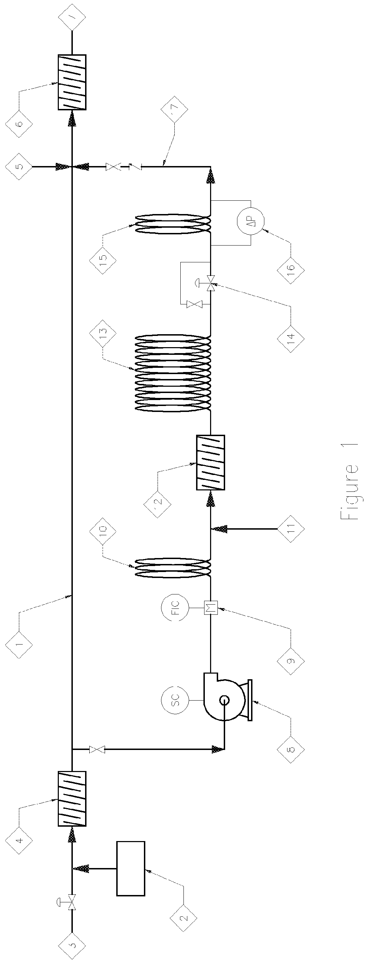

La figure 1 représente un appareil selon la présente invention comprenant notamment une dérivation, installée sur une canalisation d'injection d'une solution contenant un polymère hydrosoluble dans une installation de récupération assistée de pétrole.

L'appareil selon la présente invention comprend notamment sur la canalisation principale (1) une arrivée d'émulsion inverse de polymère hydrosoluble (2), une arrivée d'eau ou de saumure (3), un mélangeur statique (4) permettant de mixer les deux fluides en une solution dite « mère », une seconde arrivée d'eau ou de saumure (5) permettant la dilution de cette solution mère en solution diluée, un autre mélangeur statique (6) et un moyen pour transporter le mélange (7) à la zone d'utilisation pouvant se trouver à plusieurs km du lieu de dilution, et en dérivation de cette canalisation principale :
- Une pompe volumétrique (8) d'un débit de 20 1/h ;
- Un débitmètre (9) de précision à effet Coriolis ;
- Un tube calibré (10) pour simuler la maturation du polymère et le transport de la solution mère jusqu'au lieu de dilution dans la canalisation principale, ledit tube ayant une longueur de 50 mètres, un diamètre intérieur de 10 mm et fabriqué en acier super duplex ;
- une entrée d'eau ou de saumure (11) pour diluer la solution mère ;
- un mélangeur statique (12) permettant de mixer la solution mère et l'eau ou la saumure ;
- Un tube calibré (13) pour simuler la distance entre le point de dilution et la zone d'utilisation, ledit tube ayant une longueur de 400 mètres, un diamètre intérieur de 20 mm et fabriqué en acier super duplex ;
- Une vanne (14) permettant une réduction de la pression de 5 bars ;
- Un tube calibré (15) créant une perte de charge de 0.1 à 2 bar
- Un appareil de mesure de pression différentielle (16),
- Un conduit (17) pour réinjecter la solution dans la canalisation principale.

Une émulsion de copolymère d'acrylamide et d'acrylate de sodium (70/30 % molaire) est mise en oeuvre avec une saumure contenant 3000 ppm de NaCl dans un procédé EOR off-shore. L'appareil décrit ci-dessus est utilisé et positionné en dérivation de la canalisation principale. La pression est de 220 bars. Le débit dans la canalisation principale est de 125 m³/s. La concentration en polymère de la solution mère est de 10.000 ppm. Le débit dans la dérivation est de 51/s. La concentration en polymère dans la solution diluée est de 500 ppm. Dans un premier essai, on créée volontairement une différence de pression insuffisante de 1.5 bar dans le mélangeur statique (6) ne comprenant que 2 éléments. L'émulsion est mise en oeuvre dans l'appareil décrit ci-dessus. La viscosité déduite et calculée est de 15 cps. Une solution à 1000 ppm est réalisée en laboratoire et la viscosité mesurée est de 27 cps. Le ratio entre ces deux viscosités est de 0.56. Ce ratio est faible, éloigné de 1 et l'on peut en déduire que l'émulsion n'est pas bien inversée. La cause est bien entendu l'insuffisance du mélange dans le mélangeur statique (6) qui a pour conséquence une mauvaise inversion de l'émulsion, ce que l'appareil permet de détecter, et que ni la dilution, ni le temps de maturation ne permet de compenser.

Dans un second essai, la même émulsion est mise en oeuvre de la même manière mais le mélangeur statique (6) créée une différence de pression de 10 bars grâce à 8 éléments. L'émulsion est mise en oeuvre dans l'appareil décrit ci-dessus. La viscosité déduite et calculée est de 29 cps. Une solution à 500 ppm est réalisée en laboratoire et la viscosité mesurée est de 32 cps. Le ratio entre ces deux viscosités est de 0.91. Ce ratio est bon et permet de conclure que l'inversion a bien été faite.

## Revendications

1. Appareil destiné à être connecté en dérivation entre 2 points d'une canalisation principale (1) respectivement :
- un premier point au niveau duquel est formée une solution mère de polymère hydrosoluble obtenue par mélange d'eau ou de saumure avec une émulsion inverse dudit polymère, ou une poudre dudit polymère,
- et un second point à proximité duquel la solution mère est diluée,
l'appareil permettant de contrôler que 100% du polymère est dissous dans l'eau ou la saumure, après dilution entre le point d'introduction de la solution mère dans la canalisation principale et sa zone d'utilisation, en particulier dans les cas où la solution diluée n'est pas accessible ou difficilement accessible,
l'appareil comprenant une canalisation sur laquelle sont insérés successivement :
- une pompe (8),
- un débitmètre (9),
- un second tube calibré (15) pour créer une perte de charge,
- un dispositif de mesure de pression différentielle (16) entre l'entrée et la sortie du second tube calibré,
**caractérisé en ce que** sont successivement inséré entre le débitmètre (9) et le second tube calibré (15)
- un moyen d'arrivée (11) d'eau ou de saumure destiné à diluer la solution mère circulant dans la canalisation,
- un mélangeur (12) apte à homogénéiser, en ligne, la solution mère diluée,
- un premier tube calibré (13) pour simuler la distance et les conditions de déplacement de la solution diluée dans la canalisation principale entre le point au niveau duquel la solution mère est diluée et la zone d'utilisation,
- un moyen (14) apte à réduire la pression de la solution diluée circulant dans la canalisation en amont du premier tube calibré de 0.1 à 100 bars.

2. Appareil selon la revendication 1, **caractérisé en ce que** le débitmètre (9) est un débitmètre de précision de type massique à effet de Coriolis, ou de type électromagnétique.

3. Appareil selon l'une des revendications précédentes, **caractérisé en ce que** le mélangeur (12) est un mélangeur statique.

4. Appareil selon l'une des revendications précédentes, **caractérisé en ce que** le second tube (15) mesure entre 10 et 30 mètres de long pour un diamètre interne de 5 à 20 mm, la paroi présentant une épaisseur de 2 à 5 mm.

5. Appareil selon l'une des revendications précédentes, **caractérisé en ce qu'**il comprend un troisième tube (10), de préférence sous la forme d'un serpentin calibré pour simuler la distance et les conditions de déplacement de la solution mère dans la canalisation principale entre le point au niveau duquel elle est formée et le point au niveau duquel elle est diluée, le tube étant positionné entre le débitmètre (9) et le moyen d'arrivée (11) d'eau ou de saumure.

6. Appareil selon l'une des revendications précédentes, **caractérisé en ce que** les tubes (10, 13, 15) se présentent sous la forme d'un serpentin.

7. Appareil selon l'une des revendications précédentes, **caractérisée en ce que** la pompe (8), les tubes (10, 13, 15), le débitmètre (9) sont fabriqués en matériaux choisi dans le groupe comprenant :
- Les aciers austéno-ferritiques
- Les superalliages contenant principalement du Nickel, mais aussi plusieurs métaux comme le chrome, le magnésium, le fer et le titane (Hastelloy).

8. Utilisation de l'appareil selon l'une des revendications 1 à 7 dans un procédé de récupération assistée du pétrole et/ou du gaz off-shore.

9. Utilisation de l'appareil selon l'une des revendications 1 à 7 dans un procédé de récupération assistée du pétrole et/ou du gaz on-shore.

10. Méthode pour contrôler que en polymère hydrosoluble est 100% dissous dans l'eau ou la saumure, au niveau de sa zone d'utilisation dans le cas où celle-ci est inaccessible ou difficilement accessible, selon laquelle dans une canalisation (1) :
- on forme une solution mère obtenue par mélange d'eau ou de saumure avec une émulsion inverse dudit polymère, ou une poudre dudit polymère,
- on dilue la solution mère,
- on transporte la solution diluée jusqu'à sa zone d'utilisation,
- entre la formation de la solution mère et sa dilution, on dérive une partie du flux circulant dans la canalisation (1) pour le faire circuler dans l'appareil objet de l'une des revendications 1 à 7,
- on calcule la viscosité de la solution diluée par extrapolation de la différence de pression mesurée par le dispositif de mesure de pression différentielle (16) de l'appareil objet de l'une des revendications 1 à 7,
- on mesurer la viscosité d'une solution du polymère préparée à la même concentration que celle de la solution diluée, et dans des conditions optimales en laboratoire,
- on calcule le ratio entre la valeur de viscosité obtenue par extrapolation et la viscosité de la solution réalisée en laboratoire,
- on en déduit si le polymère est 100% dissous ou pas.

11. Méthode selon la revendication 10, **caractérisée en ce que** le taux de cisaillement dans le second tube calibré est compris entre 1 s⁻¹ et 500 s⁻¹, avantageusement compris entre 5 s⁻¹ et 200 s⁻¹.

12. Méthode selon l'une des revendication 10 ou 11, **caractérisée en ce que** la solution mère de polymère hydrosoluble a une concentration en polymère comprise entre 2.000 et 20.000 ppm et **en ce que** la solution diluée a une concentration en polymère comprise entre 100 et 2.500 ppm.

## Patentansprüche

1. Gerät für einen verzweigten Anschluss zwischen 2 Punkten einer Hauptleitung (1), jeweils:
- einem ersten Punkt, an dem eine Mutterlösung des wasserlöslichen Polymers erzeugt wird, die sich aus der Mischung von Wasser oder Salzlauge mit einer Invertemulsion dieses Polymers oder mit einem Pulver dieses Polymers ergibt,
- und einem zweiten Punkt, in dessen Nähe die Mutterlösung verdünnt wird,
wobei mit dem Gerät überwacht werden kann, dass sich das Polymer zwischen dem Einlasspunkt der Mutterlösung in die Hauptleitung und dem Verwendungsbereich, zu 100% im Wasser oder der Salzlauge löst, insbesondere wenn die verdünnte Lösung nicht oder nur schwer zugänglich ist,
wobei das Gerät eine Leitung umfasst, auf die nacheinander eingesetzt sind:
- eine Pumpe (8),
- ein Durchflussmesser (9),
- ein zweites kalibriertes Rohr (15) zum Erzeugen eines Druckabfalls,
- eine Vorrichtung zum Messen des Differenzdrucks (16) zwischen dem Einlass und dem Auslass des zweiten kalibrierten Rohrs,
**dadurch gekennzeichnet, dass** nacheinander zwischen dem Durchflussmesser (9) und dem zweiten kalibrierten Rohr (15) eingesetzt sind:
- eine Einlassvorrichtung (11) für Wasser oder Salzlauge zur Verdünnung der Mutterlösung, die in der Leitung zirkuliert,
- ein Mischer (12), mit dem direkt die verdünnte Mutterlösung homogenisiert werden kann,
- ein erstes kalibriertes Rohr (13), um die Distanz und die Fortbewegungsbedingungen der verdünnten Lösung in der Hauptleitung zwischen dem Punkt, in dessen Höhe die Mutterlösung verdünnt wird und dem Verwendungsbereich, zu simulieren,
- eine Vorrichtung (14) zur Verringerung des Drucks der verdünnten Lösung, die in der Leitung zirkuliert, vor dem ersten kalibrierten Rohr, von 0,1 bis 100 bar.

2. Gerät gemäß Anspruch 1, **dadurch gekennzeichnet, dass** der Durchflussmesser (9) ein Präzisionsdurchflussmesser vom Typ Coriolis-Massendurchflussmesser oder vom elektromagnetischen Typ ist.

3. Gerät nach einem der vorhergehenden Ansprüche, **dadurch gekennzeichnet, dass** es sich bei dem Mischer (12) um einen statischen Mischer handelt.

4. Gerät nach einem der vorhergehenden Ansprüche, **dadurch gekennzeichnet, dass** das zweite kalibrierte Rohr (15) mit einem Innendurchmesser von 5 bis 20 mm zwischen 10 und 30 Metern lang ist, wobei die Wand eine Dicke von 2 bis 5 mm aufweist.

5. Gerät nach einem der vorhergehenden Ansprüche, **dadurch gekennzeichnet, dass** es ein drittes Rohr (10), möglichst in Form einer kalibrierten Rohrschlange enthält, um die Distanz und die Fortbewegungsbedingungen der Mutterlösung in der Hauptleitung zwischen dem Punkt, an dem sie gebildet wird, und dem Punkt, an dem sie verdünnt wird, zu simulieren, wobei das Rohr dabei zwischen dem Durchflussmesser (9) und der Einlassvorrichtung (11) für Wasser oder Salzlauge angeordnet ist.

6. Gerät nach einem der vorhergehenden Ansprüche, **dadurch gekennzeichnet, dass** die Rohre (10, 13, 15) die Form einer Rohrschlange haben.

7. Gerät nach einem der vorhergehenden Ansprüche, **dadurch gekennzeichnet, dass** die Pumpe (8), die Rohre (10, 13, 15) und der Durchflussmesser (9) aus einem Material hergestellt werden, das zur folgenden Gruppe gehört:
- Austenitisch-ferritische Stahlsorten
- Superlegierungen, die hauptsächlich Nickel, aber auch mehrere andere Metalle, wie Chrom, Magnesium, Eisen und Titan (Hastelloy) enthalten.

8. Verwendung des Gerätes nach einem der Ansprüche 1 bis 7, in einem Verfahren zur erhöhten Erdöl- und/ oder Erdgasgewinnung off-shore.

9. Verwendung des Gerätes nach einem der Ansprüche 1 bis 7, in einem Verfahren zur erhöhten Erdöl- und/ oder Erdgasgewinnung on-shore.

10. Verfahren zur Überwachung, dass ein wasserlösliches Polymer zu 100 % in Wasser oder Salzlauge in Höhe des Verwendungsbereichs gelöst ist, wenn dieser nicht oder nur schwer zugänglich ist, diesem zufolge wird in einer Leitung (1)
- eine wasserlösliche Mutterlösung erzeugt, die sich aus der Mischung von Wasser oder Salzlauge mit einer Invertemulsion dieses Polymers oder mit einem Pulver dieses Polymers ergibt,
- die Mutterlösung verdünnt,
- die verdünnte Lösung bis zum Verwendungsbereich transportiert,
- ein Teil der in der Leitung (1) zirkulierenden Menge zwischen der Bildung der Mutterlösung und ihrer Verdünnung abgezweigt, um im Gerät, das Gegenstand eines der Ansprüche 1 bis 7 ist, zu zirkulieren,
- die Viskosität der verdünnten Lösung durch Extrapolation der Druckdifferenz berechnet, die von der Differenzdruckmessvorrichtung (16) des Geräts, das Gegenstand eines der Ansprüche 1 bis 7 ist, gemessen wurde,
- die Viskosität der Polymerlösung, die unter optimalen Laborbedingungen mit derselben Konzentration vorbereitet wird, wie die verdünnte Lösung, gemessen,
- das Verhältnis zwischen dem Viskositätswert, der sich aus der Extrapolation ergab, und der im Labor hergestellten Lösung, berechnet
- daraus wird dann der Schluss gezogen, ob das Polymer zu 100% gelöst ist oder nicht.

11. Verfahren gemäß Anspruch 10, **dadurch gekennzeichnet, dass** die Scherrate im zweiten kalibrierten Rohr zwischen 1 s⁻¹ und 500 s⁻¹, besser zwischen 5 s⁻¹ und 200 s⁻¹ liegt.

12. Verfahren gemäß einem der Ansprüche 10 oder 11, **dadurch gekennzeichnet, dass** die Mutterlösung des wasserlöslichen Polymers eine Polymerkonzentration zwischen 2.000 und 20.000 ppm hat und dass die verdünnte Lösung eine Polymerkonzentration zwischen 100 und 2.500 ppm hat.

## Claims

1. Apparatus intended to be connected in a bypass between 2 points of a main pipe (1), respectively:
- a first point whereupon a water-soluble polymer stock solution is formed, obtained by means of mixing water or brine with an invert emulsion of said polymer, or a powder of said polymer,
- and a second point near to where the stock solution is diluted,
the apparatus making it possible to monitor that 100% of the polymer is dissolved in water or brine, after dilution between the point of introduction of the stock solution into the main pipe and the use region thereof, particularly in cases where the diluted solution is not accessible or not easily accessible,
the apparatus containing a pipe within which are inserted, consecutively:
- a pump (8),
- a flowmeter (9),
- a second calibrated tube (15) for creating a pressure loss,
- a device for measuring differential pressure (16) between the inlet and the outlet of the second calibrated tube,
**characterized in that** are consecutively inserted between the flowmeter (9) and the second calibrated tube (15)
- a water or brine inlet means (11) for diluting the stock solution flowing in the pipe,
- a mixer (12) capable of in-line homogenizing the diluted stock solution,
- a first calibrated tube (13) for simulating the distance and the moving conditions of the diluted solution in the main pipe between the point where the stock solution is diluted and the use region,
- a means (14) that is capable of reducing the pressure of the diluted solution flowing in the pipe upstream of the first tube that is calibrated from 0.1 to 100 bars,

2. Apparatus according to claim 1, **characterized in that** the flowmeter (9) is a precision flowmeter of the Coriolis effect mass flow type, or of the electromagnetic type.

3. Apparatus according to one of the preceding claims, **characterized in that** the mixer (12) is a static mixer.

4. Apparatus according to one of the preceding claims, **characterized in that** the second tube (15) measures between 10 and 30 meters long with an internal diameter of 5 to 20 mm, the wall having a thickness of 2 to 5 mm.

5. Apparatus according to one of the preceding claims, **characterized in that** it comprises a third tube (10), preferably in the form of a calibrated coil in order to simulate the distance and the conditions for moving the stock solution in the main pipe between the point where it is produced and the point where it is diluted, the tube being located between the flowmeter (9) and the water or brine inlet means (11).

6. Apparatus according to one of the preceding claims, **characterized in that** the tubes (10, 13, 15) are in the form of a coil.

7. Apparatus according to one of the preceding claims, **characterized in that** the pump (8), the tubes (10, 13, 15), the flowmeter (9) are manufactured from materials chosen from the group comprising:
- Austenitic-ferritic steels
- Superalloys containing mainly nickel, but also several metals such as chromium, magnesium, iron and titanium (Hastelloy).

8. The use of the apparatus according to one of claims 1 to 7 in an enhanced oil and/or off-shore gas recovery process.

9. The use of the apparatus according to one of claims 1 to 7 in an enhanced oil and/or on-shore gas recovery process.

10. Method for monitoring that the water-soluble polymer is 100% dissolved in water or brine at the use region thereof where it is not accessible or not easily accessible, wherein, within a pipe (1):
- forming a stock solution, obtained by means of mixing water or brine with an invert emulsion of said polymer, or a powder of said polymer,
- diluting the stock solution,
- transporting the diluted solution to the use region thereof,
- between the formation of the stock solution and its dilution, bypassing a part of the stream flowing in the pipe (1) in order to circulate it within in the apparatus, object of one of the claims 1 to 7,
- calculating the viscosity of the diluted solution by extrapolating the pressure difference measured by the differential pressure measuring device (16) of the apparatus object of one of the claims 1 to 7,
- measuring the viscosity of a polymer solution prepared at the same concentration as that of the diluted solution, and under optimum laboratory conditions,
- calculating the ratio between the value of viscosity obtained by extrapolation and the viscosity of the solution made in the laboratory,
- deducing whether the polymer is 100% dissolved or not.

11. Method according to claim 10, **characterized in that** the shear rate in the second calibrated tube is between 1 s⁻¹ and 500 s⁻¹, advantageously between 5 s⁻¹ and 200 s⁻¹.

12. Method according to claim 10 or 11, **characterized in that** the water-soluble polymer stock solution has a polymer concentration of between 2,000 and 20,000 ppm and the diluted solution has a polymer concentration of between 100 and 2,500 ppm.
